# EUROPÄISCHE PATENTSCHRIFT

(11) **EP 1 922 176 B1**
(45) Veröffentlichungstag und Bekanntmachung des Hinweises auf die Patenterteilung: **25.07.2012**
(21) Anmeldenummer: 06791982.9
(22) Anmeldetag: 11.09.2006
(51) Int. Cl.: B23P 11/02, B23B 31/02

(54) **EINRICHTUNG UND VERFAHREN ZUM KÜHLEN VON WERKZEUGHALTERN MIT SCHRUMPFFUTTERN**
DEVICE AND METHOD FOR COOLING TOOL HOLDERS COMPRISING SHRINK FIT CHUCKS
INSTALLATION ET PROCEDE POUR REFROIDIR DES PORTE-OUTILS DOTES DE MANDRINS DE SERRAGE

(30) Priorität: 09.09.2005 DE 102005043206
(43) Veröffentlichungstag der Anmeldung: 21.05.2008
(73) Patentinhaber: Franz Haimer Maschinenbau KG, 86568 Hollenbach-Igenhausen (DE)
(72) Erfinder: HAIMER, Franz, 86568 Igenhausen (DE)
(74) Vertreter: Bockhorni & Kollegen
(86) Internationale Anmeldenummer: PCT/EP2006/008834
(87) Internationale Veröffentlichungsnummer: WO 2007/028653

(56) Entgegenhaltungen:
- EP-A2- 1 138 422
- DE-U1-202004 004 424
- DE-U1-202004 014 564
- US-A- 6 161 309

## Beschreibung

Die vorliegende Erfindung betrifft eine Einrichtung und ein Verfahren zum Kühlen von Werkzeughaltern mit Schrumpffuttern gemäß den Oberbegriffen von Anspruch 1 und 18. Eine solche Vorrichtung bzw. ein solches Verfahren ist aus der DE 20 2004 014 564 U bekannt.

Werkzeughalter mit Schrumpffuttern sind vielfältig bekannt. Sie dienen dem Einspannen von Rohr-, Dreh-, Fräs-, Reib- und Schleifwerkzeugen oder dgl. über einen thermisch bedingten Schrumpfvorgang. Üblicherweise werden solche Schrumpffutter durch induktive Schrumpfanlagen thermisch erhitzt, wodurch sich der Innendurchmesser des Schrumpffutters vergrößert. Bei vergrößertem Innendurchmesser wird ein einzuspannendes Werkzeug in das Schrumpffutter eingesetzt, wobei das Verhältnis des Innendurchmessers des Schrumpffutters zum Schaftdurchmesser des Werkzeugs derart ausgelegt ist, dass beim anschließenden Abkühlen des Schrumpffutters das Werkzeug mit dem Schrumpffutter drehmomentfest verspannt ist.

Zur Beschleunigung der Abkühlung werden häufig Abkühlvorrichtungen mit ringartigen Kühlkörpern verwendet, wobei die Kühlkörper in ihrer Innengeometrie dem Schrumpffutter angepasst sind und von einer Kühlflüssigkeit durchflossen werden. Nachteilig an diesen Kühlkörpern ist es, dass sie nur sehr schwierig und meist thermisch ineffektiv an verschiedene Schrumpffutterabmessungen anpassbar sind und deshalb für die verschiedenen Schrumpffutter eine Vielzahl von Kühlkörpern bereit gehalten werden müssen.

Zur Vermeidung dieses Nachteils sind direkte Abkühlungsvorrichtungen bekannt, die üblicherweise eine Kühlflüssigkeit mit Zusätzen verwenden, die ein Rosten verhindern sollen. Das Schrumpffutter samt eingesetztem Werkzeug wird hierbei in ein Gehäuse eingebracht, das daraufhin wasserdicht verschlossen wird, um mit der Kühlflüssigkeit gekühlt zu werden so wie es beispielsweise aus der DE 20 2004 004 424 U1 bekannt ist. Damit ist die Abkühlvorrichtung zwar sehr flexibel für die verschiedensten Schrumpffutter einsetzbar, jedoch ist eine solche Abkühlungsvorrichtung nicht geeignet, mehrere Schrumpffutter direkt nacheinander, insbesondere in einem automatisierten Ablauf, zu kühlen.

Die EP 1 138 422 A2 wiederum offenbart eine Vorrichtung zur automatischer Kühlung mehrere Werkzeughalter mit einem gasförmigen Kühlmedienen, das als Keine so effiziente Kühlung ermöglicht wie flüssige Kühlmedien.

Aufgabe der vorliegenden Erfindung ist es deshalb, eine Vorrichtung zur Kühlung von Werkzeughaltern mit Schrumpffuttern bereit zu stellen, die flexibel für die verschiedensten Werkzeughalterformen verwendbar ist und dabei gleichzeitig eine effizientere Kühlung von insbesondere mehreren direkt nacheinander folgenden Werkzeughaltern ermöglicht.

Diese Aufgabe wird gelöst durch eine Vorrichtung gemäß Anspruch 1 und ein Verfahren gemäß Anspruch 18.

Nach Maßgabe der vorliegenden Erfindung umfasst die Vorrichtung zur Kühlung von Werkzeughaltern mit Schrumpffuttern, die in einer Werkzeughalteraufnahme aufgenommen sind, Mittel zum Beaufschlagen des Werkzeughalters mit Kühlmitteln in flüssiger Form, Mittel zur Führung der Werkzeughalteraufnahme und Mittel zur Aktivierung der Mittel zur Kühlung und der Mittel zur Führung. Dabei sind die Mittel zur Führung angepasst, mehrere Werkzeughalteraufnahmen gleichzeitig nacheinander durch die Einrichtung zu führen.

Durch die Mittel zur Führung der Werkzeughalteraufnahmen wird vorteilhaft erreicht, dass nicht nur eine Werkzeughalteraufnahme sondern mehrere Werkzeughalteraufnahmen gleichzeitig nacheinander durch die Vorrichtung geführt werden können und es somit nicht mehr wie bisher notwendig ist, den Kühlvorgang an einem Werkzeughalter abzuwarten bis ein weiterer Werkzeughalter per Hand einer solchen Kühlvorrichtung zugeführt werden kann. Die erfindungsgemäße Kühlvorrichtung ist somit wesentlich effizienter und lässt insbesondere eine Automatisierung des Kühlvorganges für mehrere aufeinander folgende Werkzeughalter zu.

Vorteilhaft führen die Mittel zur Führung die Werkzeughalteraufnahme im Wesentlichen horizontal durch die Vorrichtung, da so der konstruktive Aufwand gering gehalten werden kann.

Vorzugsweise sind die Mittel zur Aktivierung angepasst, die Einrichtung halbautomatisch, vorzugsweise vollautomatisch, zu betreiben. Ein halbautomatischer Betrieb kann z. B. dadurch ermöglicht werden, dass ein entsprechender, vom Bedienpersonal zu bedienender Taster vorgesehen ist, der nach dem Einführen einer Werkzeughalteraufnahme mit heißem Werkzeughalter in die Kühlvorrichtung gedrückt wird, wodurch die Mittel zur Führung und die Mittel zur Kühlung aktiviert werden. Ein vollautomatischer Betrieb wiederum ließe sich durch eine geeignete Sensortechnik ermöglichen, die das Einführen einer Werkzeughalteraufnahme in die Kühlvorrichtung erkennt.

Bevorzugt führen die Mittel zur Führung die Werkzeughalteraufnahmen in einer im Wesentlichen linearen ersten Führungsrichtung durch die Vorrichtung, wodurch ein besonders schlanker Aufbau der Vorrichtung ermöglicht wird. Falls die Vorrichtung eher kompakt gehalten werden soll, ist es vorteilhaft, wenn die Mittel zur Führung die Werkzeughalteraufnahmen in einer im Wesentlichen kreisförmigen ersten Führungsrichtung durch die Vorrichtung führen.

Falls als Kühlmittel Kühlflüssigkeiten verwendet werden, ist es vorteilhaft, wenn weiterhin Mittel zur Trocknung des abgekühlten Werkzeughalters vorgesehen sind und die Mittel zur Kühlung und zur Trocknung in einzelnen Bereichen der Einrichtung von einander getrennt als Kühlungsstation und Trocknungsstation verwirklicht sind. Dadurch wird die Effektivität der Kühlungsvorrichtung erhöht, da gleichzeitig in der Kühlungsstation ein Werkzeughalter gekühlt werden und in der Trocknungsstation ein Werkzeughalter getrocknet werden kann.

In einer bevorzugten Ausgestaltung sind weiterhin Mittel zur Temperaturerkennung vorgesehen, mit deren Hilfe die Temperatur des Werkzeughalters bestimmt werden kann und entsprechend der festgestellten Temperatur die Mittel zur Aktivierung so angesteuert werden, dass die Mittel zur Kühlung das Kühlmittel gezielt abgeben.

Vorteilhaft ist es weiterhin, wenn die Vorrichtung eine Parkstation und gegebenenfalls eine Übergabestation zu der Parkstation aufweist, in der Werkzeughalteraufnahmen mit gekühlten bzw. gekühlten und getrockneten Werkzeughaltern vor der Entnahme aus der Kühlungsvorrichtung gelagert werden. Durch diese Parkstation ist es möglich, dass mehrere Werkzeughalter auch dann direkt aufeinander folgend durch die Kühlvorrichtung gekühlt werden können, wenn sie nicht direkt durch das Bedienpersonal aus der Kühlvorrichtung entnommen werden.

In gleichem Maße ist es sinnvoll, wenn vor der Kühlungsstation eine Zuführungsstation vorgesehen ist, in der ein oder mehrere Werkzeughalteraufnahmen vor Beginn der Kühlung zwischengelagert werden können.

In diesem Zusammenhang ist es sinnvoll, wenn die Führungsrichtungen in der Zuführstation und/oder der Parkstation unterschiedlich von der ersten Führungsrichtung sind, da dadurch die Kühlvorrichtung sehr kompakt gehalten werden kann. Insbesondere ist es vorteilhaft, wenn diese beiden Führungsrichtungen flexibel an örtliche Gegebenheiten des Aufstellortes der Kühlvorrichtung anpassbar sind.

Auf besonders einfache Art und Weise lassen sich die Mittel zur Führung durch ein oder mehrere Laufketten oder Förderbänder verwirklichen, die Mitnehmer für die Werkzeughalteraufnahmen aufweisen. Andererseits können auch Greifeinrichtungen vorgesehen sein, die seitlich oder über der Führungsrichtung angeordnet sind und entweder entlang der Führungsrichtung verfahrbar sind oder jeweils eine Greifeinrichtung einer Station zugeordnet ist und zwei, hinsichtlich der Führungsrichtung benachbarte Greifeinrichtungen jeweils eine Werkzeughalteraufnahme weiterleiten.

Um ein Ausdringen von Kühlmittel, welches üblicherweise Wasser und Rostschutzmittel enthält, bzw. dessen Dämpfe in die Umgebung der Kühlvorrichtung im Wesentlichen zu unterbinden, wird bevorzugt, wenn zumindest die Kühlungsstation, insbesondere auch die Trocknungsstation, geeignete Abschirmungsmittel aufweist. Solche Abschirmungsmittel können beispielsweise aus einem gas- und wasserdichten Behälter bestehen. Gegebenenfalls sind an der Unterseite des Behälters geeignete Abführ- und Rückführmittel vorzusehen, die das Kühlmittel auffangen.

Dementsprechend können auch in den Behälterwänden geeignete Mittel zum Absaugen entstehender Dämpfe angebracht sein.

Zur Erleichterung des Führens der Werkzeughalteraufnahmen durch eine solchermaßen abgeschirmte Vorrichtung können an verschiedenen Stellen öffenbare Abschirmtüren vorgesehen sein, die im Betrieb der Vorrichtung geschlossen sind und während des Führens geöffnet werden können. Dadurch kann der Behälter stets an der Kühlungsvorrichtung verbleiben. Insbesondere können solche Türen vor und nach der Kühlstation, nach der Trocknungsstation und nach der Übergabestation vorgesehen sein.

Die Kühlungsmittel wie auch die Trocknungsmittel können vorteilhaft als Ring mit mehreren Sprühelementen ausgeführt sein, die in Bezug auf den Werkzeughalter vertikal und zu diesen im Wesentlichen konzentrisch absenkbar und anhebbar sind. Auf diese Weise lässt sich eine besonders gleichmäßige Kühlung und Trocknung des Werkzeughalters erzielen. Zur Steuerung der Kühlungs- und Trocknungsmittel in ihrer vertikalen Bewegung können geeignete Sensoren vorgesehen sein, die die Kontur des Werkzeughalters feststellen.

Andererseits können die Kühlungsmittel und die Trocknungsmittel auch als Sprühelemente ausgeführt sein, die in Bezug auf die erste Führungsrichtung beidseitig von dem Werkzeughalter angeordnet sind. Diese Ausführung ist konstruktiv sehr einfach gestaltet. Zur Optimierung des Kühlungseffektes können die Kühlmittelsprühelemente radial auf den Werkzeughalter weisen. Auch bei dieser Ausgestaltung können die Sprühelemente vertikal verfahrbar sein oder es können mehrere Sprühelemente vertikal übereinander angeordnet sein.

Dementsprechend beinhaltet das Kühlungsverfahren gemäß der vorliegenden Erfindung das Kühlen eines Werkzeughalters mit einem Kühlmittel und das Führen eines bzw. gleichzeitig mehrerer Werkzeughalteraufnahmen nacheinander, wobei das Verfahren vorzugsweise mit einer Vorrichtung gemäß der obigen Beschreibung durchgeführt wird. Dabei wird als Kühlmittel vorzugsweise ein flüssiges Kühlmittel verwendet, das auf den Werkzeughalter gesprüht wird, und nach dem Kühlungsschritt erfolgt ein Trocknungsschritt, bei dem der Werkzeughalter bevorzugt mit Druckluft besprüht wird. Durch die Druckluft entsteht quasi ein Wischeffekt, der die Kühlflüssigkeit vom Werkzeughalter, vorzugsweise senkrecht nach unten wegwischt und damit trocknet.

Die Werkzeughalteraufnahmen können entweder kontinuierlich, ohne Unterbrechung durch die Vorrichtung geführt werden oder taktweise, wobei pro Takt mindestens eine Werkzeughalteraufnahme sich in einer Station der Vorrichtung befindet und zwischen den Takten mindestens eine Werkzeughalteraufnahme vor einer Station zu einer nachfolgenden geführt wird. Vorteilhaft werden zwischen den Takten die Abschirmtüren zwischen den einzelnen Stationen geöffnet, wobei insbesondere nur diejenigen Abschirmtüren geöffnet werden, die von Werkzeughalteraufnahmen passiert werden. Zu diesem Zwecke ist es sinnvoll, wenn entsprechende Sensoren vorgesehen sind, die erkennen, ob Werkzeughalteraufnahmen im Begriff stehen, Abschirmtüren zu passieren oder nicht.

Nach Maßgabe einer alternativen Ausgestaltungsform der vorliegenden Erfindung umfasst die Vorrichtung zur Kühlung von Werkzeughaltern mit Schrumpffuttern, die in einer Werkzeughalteraufnahme aufgenommen sind, Mittel zum Beaufschlagen des Werkzeughalters mit Kühlmitteln in vorzugsweise flüssiger Form, Mittel zur Führung der Werkzeughalteraufnahme und Mittel zur Aktivierung der Mittel zur Kühlung und der Mittel zur Führung. Dabei sind die Mittel zur Führung angepasst, mehrere Werkzeughalteraufnahmen gleichzeitig nacheinander durch die Einrichtung zu führen. Durch die Mittel zur Führung der Werkzeughalteraufnahmen wird, wie schon ausgeführt, vorteilhaft erreicht, dass nicht nur eine Werkzeughalteraufnahme sondern mehrere Werkzeughalteraufnahmen gleichzeitig nacheinander durch die Vorrichtung geführt werden können und es somit nicht mehr wie bisher notwendig ist, den Kühlvorgang an einem Werkzeughalter abzuwarten bis ein weiterer Werkzeughalter per Hand einer solchen Kühlvorrichtung zugeführt werden kann. Die erfindungsgemäße Kühlvorrichtung ist somit wesentlich effizienter und lässt insbesondere eine Automatisierung des Kühlvorganges für mehrere aufeinander folgende Werkzeughalter zu. Vorteilhaft führen die Mittel zur Führung die Werkzeughalteraufnahme im Wesentlichen vertikal durch die Vorrichtung, da der konstruktive Aufwand so ebenfalls gering gehalten werden kann.

Weitere Vorteile, Kennzeichen und Merkmale der vorliegenden Erfindung werden anhand der nachfolgenden Beschreibung im Zusammenhang mit den Figuren deutlich. Dabei zeigen
- Fig.1: eine erste Ausführungsform der vorliegenden Erfindung schematisch in einer vertikalen Schnittdarstellung,
- Fig. 2: eine Vorrichtung gemäß Fig. 1 zusammen mit einer Schrumpfvorrichtung in einer perspektivischen Gesamtschau,
- Fig. 3: eine zweite Ausführungsform der vorliegenden Erfindung schematisch in einer vertikalen Schnittdarstellung und
- Fig. 4: die Vorrichtung gemäß Fig. 3 zusammen mit einer Schrumpfvorrichtung in einer perspektivischen Gesamtschau

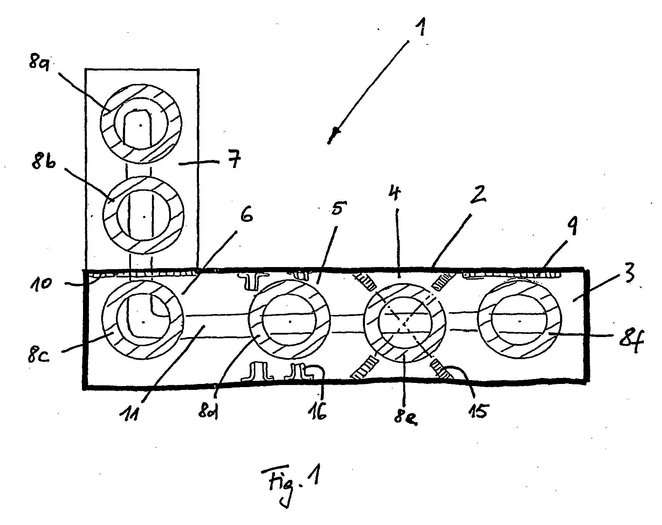

Die in Fig. 1 rein schematisch in einer Draufsicht dargestellt Kühlungsvorrichtung 1 gemäß der vorliegenden Erfindung umfasst einen Behälter 2, in dessen Innerem eine Zuführungsstation 3, eine Kühlungsstation 4, eine Trocknungsstation 5 und eine Übergabestation 6 angeordnet sind. Außerhalb des Behälters 2 anschließend an die Übergabestation 6 befindet sich eine Parkstation 7, die geeignet ist, zwei Werkzeughalteraufnahmen 8a, 8b aufzunehmen. An der Zuführstation 3 und der Übergabestation 6 befinden sich Türen 9, 10, die zum Verschluss des Behälters 2 im Betrieb der Kühlungsvorrichtung vorgesehen sind zur Bestückung und Überführung der Werkzeughalteraufnahmen 8a, 8b ... jedoch geöffnet werden können.

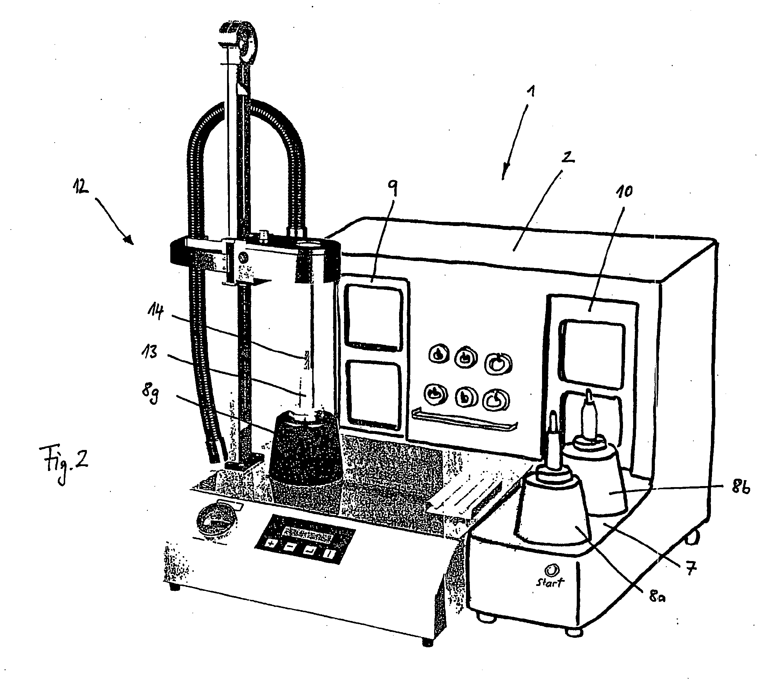

Zum Führen der Werkzeughalteraufnahmen 8a, 8b ... innerhalb der Kühlungsvorrichtung 1 ist ein Führungsmittel 11 vorgesehen, das in Form einer Laufkette mit Mitnehmern ausgebildet ist. Innerhalb des geschlossenen Gehäuses 2 verläuft die Laufkette 11 in einer ersten Führungsrichtung und zweigt in der Übergabestation 6 in eine dazu senkrechte zweite Führungsrichtung ab. Auf diese Weise wird, wie in Fig. 2 gut zu erkennen ist, die Kühlungsvorrichtung geometrisch optimal an eine Schrumpfvorrichtung 12 bekannten Typs angepasst, wodurch beide Vorrichtungen 1, 12 besonders platzsparend angeordnet werden können.

Im Betrieb der Kühlungsvorrichtung 1 wird einen Werkzeughalteraufnahme 8g, in der sich ein durch den Schrumpfvorgang heißer Werkzeughalter 13 mit darin eingespanntem Werkzeug 14 befindet, durch die Tür 9 der Zuführstation 3 zugeführt. Zum Öffnen der Tür 9 wird entweder ein entsprechender Öffnungsmechanismus per Knopfdruck betätigt oder das Öffnen erfolgt selbständig mittels einer geeigneten Sensorerkennung. Nachdem die Tür 9 per Knopfdruck oder automatisch wieder verschlossen ist, wird die Werkzeughalteraufnahme 8f per Knopfdruck oder automatisch in die Kühlstation 4 mittels der Laufkette überführt, wobei falls sich gerade eine andere Werkzeughalteraufnahme 8c in der Übergabestation 6 befindet, sich die Tür 10 gleichzeitig öffnet und diese Werkzeughalteraufnahme 8c in die Parkstation 7 überführt wird. Nach dem Schließen der Tür 10 per Knopfdruck oder automatisch ist das Gehäuse 2 auch an dieser Seite abgedichtet, wodurch das Gehäuse 2 so abgedichtet ist, dass kein Kühlmittel bzw. Kühlmitteldampf außerhalb in die Umgebung der Kühlungsvorrichtung 1 gelangen kann, und der Kühlvorgang kann begonnen werden.

Zu diesem Zwecke kann wie bei allen bisherigen und folgenden Aktionen die Aktion per Knopfdruck oder automatisch gestartet werden, weshalb auf dieses Vorgehen im Weiteren nicht mehr hingewiesen werden wird. Für den Kühlungsvorgang sind im Inneren der Kühlstation 4 radial auf den Werkzeughalter 13 weisende Kühlmittelsprühdüsen 15 angeordnet, die den Werkzeughalter 13 durch Beaufschlagung mit Kühlmittel abkühlen. Zur Optimierung des Kühlungsvorganges kann eine Temperatursensorik (nicht gezeigt) vorgesehen sein, die die Temperatur des Werkzeughalters 13 erkennt und die Beaufschlagung mit Kühlflüssigkeit geeignet steuert. Weiterhin kann vorgesehen sein, dass insbesondere für lange Werkzeughalteraufnahmen 13, mehrere Kühlmittelsprühdüsen 15 vertikal übereinander angeordnet sind oder dass die Kühlmittelsprühdüsen 15 in einer Ebene angeordnet sind und gemeinsam vertikal herabgesenkt und angehoben werden können.

Nachdem der Kühlvorgang abgeschlossen wurde, d. h. das Werkzeug 14 in dem Werkzeughalter 13 drehmomentfest verspannt ist, wird die Werkzeughalteraufnahme 8e von der Kühlungsstation 4 in die Trocknungsstation 5 überführt und dort mittels seitlich angebrachter Druckluftdüsen 16 die Kühlflüssigkeit von Werkzeug 14 und Werkzeughalter 13 abgeblasen, so dass diese getrocknet werden. Nach Abschluss der Trocknung wird die Werkzeughalteraufnahme 8d in die Übergabestation 6 und nach Öffnen der Tür 10 in die Parkstation 7 überführt, wo sie vom Bedienpersonal entnommen werden kann.

Alle eben geschilderten Vorgänge erfolgen bei der Kühlungsvorrichtung 1 taktweise, d. h. dass während des Verbleibs der Werkzeughalteraufnahme 8a,8b ... in einer der Station 3, 4, 5, 6 innerhalb des Gehäuses 2 der Kühlungsvorrichtung 1 keine Weiterführung der Werkzeughalteraufnahmen 8a,8b ... zwischen den einzelnen Stationen 3, 4, 5, 6, 7 stattfindet.

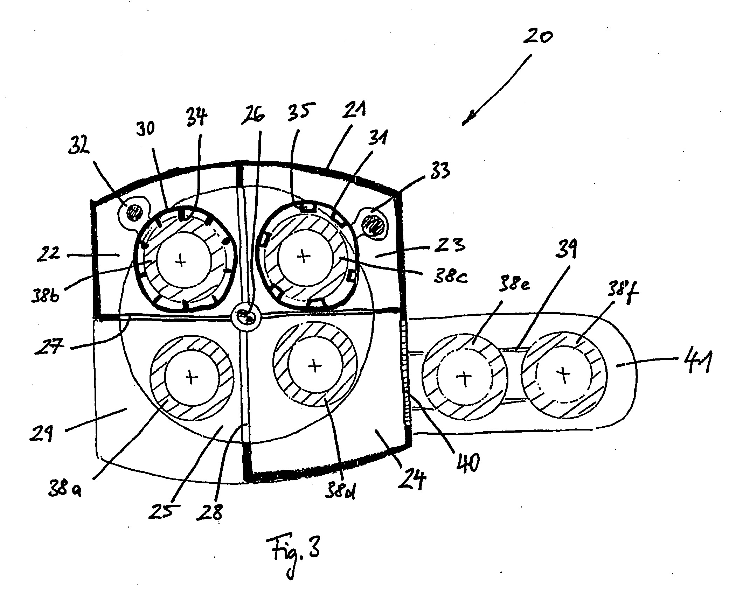

In den Fig. 2 und 3 ist rein schematisch eine weitere Ausführungsform der erfindungsgemäßen Kühlungsvorrichtung 20 dargestellt. Diese weist ebenfalls einen geschlossenen Behälter 21 auf, in dessen Innerem sich eine Kühlungsstation 22, eine Trocknungsstation 23 und eine Übergabestation 24 befinden. Die Führung innerhalb des Behälters 21 erfolgt mittels eines Drehtellers 25, der über seiner Drehachse 26 kreuzartig im Rechtenwinkel zueinander angeordnete durchgehende Wände 27, 28 aufweist, die jeweils die einzelnen Stationen 22, 23, 24 voneinander und die Kühlungsstation 22 und die Übergabestation 24 von der Zuführstation 29 abschirmen. Auf diese Weise ist sichergestellt, dass während des Kühlvorgangs Kühlflüssigkeit und Dämpfe nicht von der Kühlungsstation 22 in die anderen Stationen bzw. die Umgebung der Kühlungsvorrichtung 20 übertragen werden können.

In der Kühlungsstation 22 und der Trocknungsstation 23 sind Ringelemente 30, 31 an vertikalen Linearführungen 32, 33 angeordnet, die in regelmäßigen Abständen angeordnete und nach innen gerichtete Kühlmittelsprühdüsen 34 bzw. Druckluftsprühdüsen 35 aufweisen. Über die Linearführungen 32, 33 können die Ringe 30, 31 konzentrisch zu den Werkzeughaltern 36 und den Werkzeugen 37 auf und nieder bewegt werden und so der Kühlungsvorgang bzw. der Trocknungsvorgang optimal durchgeführt werden.

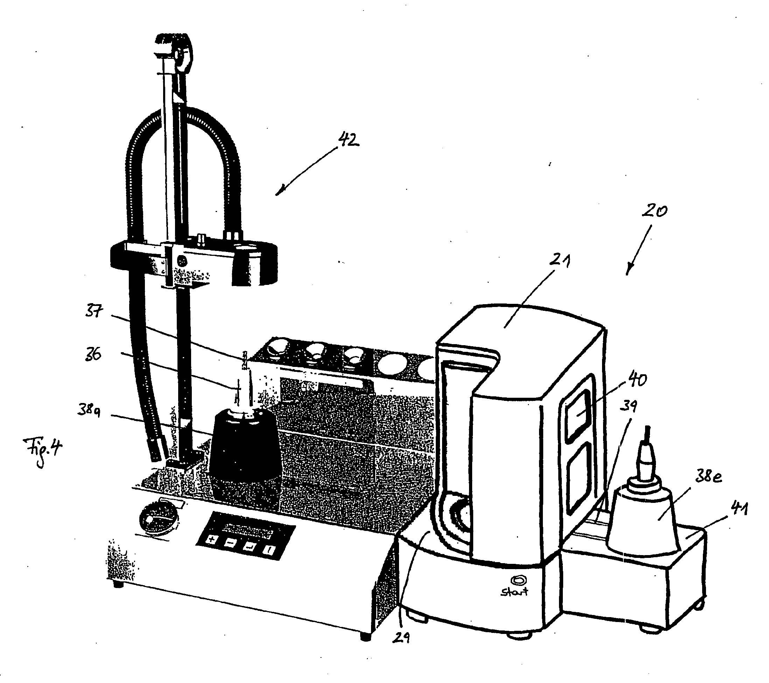

Im Betrieb der Kühlungsvorrichtung 20 wird eine Werkzeughalteraufnahme 38a, in der sich ein Werkzeughalter 36 mit einem darin eingeschrumpften Werkzeug 37 befindet, der Zuführungsstation 29 auf dem Drehteller 25 zugeführt. Danach wird der Drehteller jeweils in 90° Schritten in die Kühlungsstation 22, von dort in die Trocknungsstation 23 und nach erfolgter Trocknung in die Übergabestation 24 gedreht. Von der Übergabestation 24 wird die Werkzeughalteraufnahme 38d mit geeigneten Führungsmitteln 39 nach Öffnung der Tür 40 in die Parkstation 41, wobei der Einfachheit halber in Fig.4 nur eine Werkzeughalteraufnahme 38e gegenüber den zwei Werkzeughalteraufnahmen 38e,38f in Fig. 3 dargestellt sind. So durchlaufen die Werkzeughalteraufnahmen 38a,38b ... ausgehend von einer an sich bekannten Schrumpfvorrichtung 42 sukzessive und taktweise die Kühlungsvorrichtung 20 und können vom Bedienpersonal aus der Parkstation 41 entnommen werden.

Aus der vorstehenden Beschreibung ist deutlich geworden, dass mit Hilfe der erfindungsgemäßen Kühlungsvorrichtung 1,20 und des erfindungsgemäßen Verfahrens zur Kühlung von Werkzeughalter mit Schrumpffuttern eine besonders effiziente, vor allem komplett automatisierbare Kühlung erreichen lässt, die auch eine sukzessiv nach einander erfolgende Kühlung von mehreren Werkzeughaltern 13, 36 gestattet. Dabei ist die Kühlungsvorrichtung 1,20 nicht nur sehr wirtschaftlich sondern sie kann in ihrer Form so gestaltet werden, dass sie perfekt an örtliche Platzgegebenheiten und schon vorhandene Schrumpfvorrichtungen 12, 42 angepasst ist.

## Patentansprüche

1. Vorrichtung (1; 20) zur Kühlung von Werkzeughaltern (13; 36) mit Schrumpffuttern, die in einer Werkzeughalteraufnahme (8a,8b ...; 38a,38b ...) aufgenommen sind, mit Mitteln zur Kühlung (15; 34), die den Werkzeughalter (13; 36) mit Kühlmittel in flüssiger Form beaufschlagen, wobei Mittel zur Führung (11; 25,39) der Werkzeughalteraufnahme (8a,8b ...; 38a,38b ...) vorgesehen sind, wobei Mittel zur Aktivierung der Mittel zur Kühlung (15; 34) und der Mittel zur Führung (11; 25,39) vorgesehen sind,
**dadurch gekennzeichnet, dass**
weiterhin eine Zuführstation (3; 29) zum Zuführen von durch einen Schrumpfvorgang heißer Werkzeughalter (13; 36) vor der Kühlungsstation (4; 22) vorgesehen ist, wobei die Zuführstation (3; 29) und die Kühlungsstation (4; 22) in einzelnen Bereichen der Vorrichtung (1; 20) getrennt voneinander verwirklicht sind, und wobei die Mittel zur Führung (11; 25,39) angepasst sind, mehrere Werkzeughalteraufnahmen (8a,8b ...; 38a,38b ...) gleichzeitig nacheinander durch die Vorrichtung (1; 20) zu führen, wobei insbesondere die Mittel zur Führung (11; 25,39) angepasst sind, die Werkzeughalteraufnahmen im Wesentlichen horizontal durch die Vorrichtung zu führen.

2. Vorrichtung gemäß (1; 20) Anspruch 1, **dadurch gekennzeichnet, dass** die Mittel zur Aktivierung angepasst sind, die Vorrichtung (1; 20) halbautomatisch, vorzugsweise vollautomatisch, zu betreiben.

3. Vorrichtung (1) gemäß Anspruch 1 oder 2, **dadurch gekennzeichnet, dass** die Mittel zur Führung (11) angepasst sind, die Werkzeughalteraufnahmen (8a,8b ...) in einer im Wesentlichen linearen ersten Führungsrichtung zu führen.

4. Vorrichtung (20) gemäß einem der vorherigen Ansprüche, **dadurch gekennzeichnet, dass** die Mittel zur Führung (25) angepasst sind, die Werkzeughalteraufnahmen (38a,38b ...) in einer im Wesentlichen kreisförmigen ersten Führungsrichtung zu führen.

5. Vorrichtung (1; 20) gemäß einem der vorherigen Ansprüche, **dadurch gekennzeichnet, dass** weiterhin Mittel zur Trocknung (16; 35) des durch die Beaufschlagung mit Kühlmittel abgekühlten Werkzeughalters (13, 36) vorgesehen sind
und die Mittel zur Kühlung (15; 34) und die Mittel zur Trocknung (16; 35) in einzelnen Bereichen der Vorrichtung (1; 20) voneinander getrennt als Kühlungsstation (4; 22) und Trocknungsstation (5; 23) verwirklicht sind.

6. Vorrichtung (1; 20) gemäß einem der vorherigen Ansprüche, **dadurch gekennzeichnet, dass** weiterhin Mittel zur Temperaturerkennung vorgesehen sind, die die Temperatur eines Werkzeughalters (13; 36) erkennen können und die die Mittel zur Aktivierung entsprechend ansteuern, so dass die Mittel zur Kühlung (15; 34) gezielt Kühlmittel abgeben.

7. Vorrichtung (1; 20) gemäß einem der vorherigen Ansprüche, **dadurch gekennzeichnet, dass** weiterhin eine Parkstation (7; 41)für Werkzeughalteraufnahmen (8a,8b ...; 38a,38b ...) mit gekühlten bzw. gekühlten und getrockneten Werkzeughaltern (13; 36) vorgesehen ist.

8. Vorrichtung (1; 20) gemäß einem der vorherigen Ansprüche, **dadurch gekennzeichnet, dass** nach der Kühlungsstation (4; 22) oder der Trocknungsstation (5; 23) eine Übergabestation (6; 24)vorgesehen ist zur Ausgabe der Werkzeughalteraufnahmen (8a,8b ...; 38a,38b ...) bzw. Überführung der Werkzeughalteraufnahmen (8a,8b ...; 38a,38b ...) in die Parkstation (7; 41).

9. Vorrichtung (1; 20) gemäß einem der Ansprüche 7 oder 8, **dadurch gekennzeichnet, dass** die Mittel zur Führung (11; 39) angepasst sind, die Werkzeughalteraufnahmen (8a,8b ...; 38a,38b ...) in die Parkstation (7; 41) in einer zweiten Führungsrichtung zu führen, die von der ersten Führungsrichtung horizontal abweicht.

10. Vorrichtung (1) gemäß einem der Ansprüche 7 bis 9, **dadurch gekennzeichnet, dass** die Mittel zur Führung (11) angepasst sind, die Werkzeughalteraufnahmen (8a,8b ...) von der Zuführungsstation in einer dritten Führungsrichtung, die von der ersten Führungsrichtung horizontal abweicht, der Kühlungsstation (4) zu zu führen.

11. Vorrichtung (1; 20) gemäß einem der vorherigen Ansprüche, **dadurch gekennzeichnet, dass** die Mittel zur Führung (11; 39) ein oder mehrere Laufketten oder Förderbänder mit Mitnehmern oder Greifeinrichtungen, die seitlich oder über der Führungsrichtung angeordnet und bevorzugt entlang den Führungsrichtung verfahrbar sind, für die Werkzeughalteraufnahmen (8a,8b ...; 38a,38b ...) umfassen.

12. Vorrichtung (1; 20) gemäß einem der vorherigen Ansprüche, **dadurch gekennzeichnet, dass** zumindest die Kühlungsstation (4; 22), bevorzugt auch die Trocknungsstation (5; 23) Abschirmungsmittel (2, 9; 21,27,28) aufweisen, die das Ausdringen von Kühlmittel in die Umgebung der Vorrichtung (1; 20) im Wesentlichen unterbinden, wobei insbesondere vor der Kühlungsstation (4; 22) eine öffenbare Abschirmtür (9; 27,28) vorgesehen ist und/oder nach der Kühlungsstation (22) eine öffenbare Abschirmtür (27,28) vorgesehen ist.

13. Vorrichtung (20) gemäß Anspruch 12, **dadurch gekennzeichnet, dass** nach der Trocknungsstation (23) eine öffenbare Abschirmtür (27,28) vorgesehen ist, wobei insbesondere nach der Übergabestation (6; 24) eine öffenbare Abschirmtür (10; 40) vorgesehen ist.

14. Vorrichtung (20) gemäß einem der vorherigen Ansprüche, **dadurch gekennzeichnet, dass** die Kühlungsmittel als Ring (30) mit mehreren Kühlmittelsprühelementen (34) ausgeführt sind, die in Bezug auf den in der Kühlungsstation (22) befindlichen Werkzeughalter (36) vertikal und zu diesem im Wesentlichen konzentrisch absenkbar und anhebbar sind und/oder dass die Trocknungsmittel als Ring (31) mit mehreren Druckluftsprühelementen (35) ausgeführt sind, die in Bezug auf den in der Trocknungsstation (23) befindlichen Werkzeughalter (36) vertikal und zu diesem im Wesentlichen konzentrisch absenkbar und anhebbar sind.

15. Vorrichtung (1) gemäß einem der Ansprüche 1 bis 13, **dadurch gekennzeichnet, dass** die Kühlungsmittel als mehrere Kühlmittelsprühelemente (15) ausgeführt sind, die in Bezug auf die erste Führungsrichtung beidseitig von dem in der Kühlungsstation (4) angeordneten Werkzeughalter (13) angeordnet sind und vorzugsweise radial auf den Werkzeughalter (13) weisen.

16. Vorrichtung (1) gemäß einem der Ansprüche 1 bis 13 oder 15, **dadurch gekennzeichnet, dass** die Trocknungsmittel als Druckluftsprühelemente (16) ausgeführt sind, die in Bezug auf die erste Führungsrichtung seitlich von dem in der Trocknungsstation (5) aufgenommenen Werkzeughalter (13) angeordnet sind.

17. Vorrichtung (1) gemäß einem der Ansprüche 15 oder 16, **dadurch gekennzeichnet, dass** die Kühlmittelsprühelemente (15) und/oder die Druckluftsprühelemente (16) in Bezug auf den Werkzeughalter (13) vertikal absenkbar und anhebbar sind.

18. Verfahren zum Kühlen von Werkzeughaltern (13; 36) mit Schrumpffuttern, die in einer Werkzeughalteraufnahme (8a,8b ...; 38a,38b ...) aufgenommen sind, umfassend ein Kühlen des Werkzeughalters (13; 36) mit einem flüssigen Kühlmittel,
**gekennzeichnet durch**
Zuführen von **durch** einen Schrumpfvorgang heißer Werkzeughalter (13; 36) vor dem Kühlen, wobei das Zuführen und Kühlen in einzelnen Bereichen (4, 3; 22, 29) der Vorrichtung (1; 20) erfolgt, die getrennt voneinander verwirklicht sind, und Führen gleichzeitig mehrerer Werkzeughalteraufnahmen (8a,8b ...; 38a,38b ...) nacheinander **durch** Mittel zur Führung (11; 25,39) der Werkzeughalteraufnahmen (8a,8b ...; 38a,38b ...),
wobei das Verfahren insbesondere mit einer Vorrichtung. (1; 20) gemäß einem der Ansprüche 1 bis 17 durchgeführt wird und die Verfahrensschritte insbesondere halbautomatisch, bevorzugt vollautomatisch, ausgeführt werden, wobei insbesondere das flüssige Kühlmittel auf den Werkzeughalter (13; 36) gesprüht wird, und nach dem Kühlungsschritt ein Trocknungsschritt erfolgt, bei dem der Werkzeughalter (13; 36) bevorzugt mit Druckluft besprüht wird.

19. Verfahren gemäß Anspruch 18, **dadurch gekennzeichnet, dass** die Werkzeughalteraufnahmen (8a,8b ...; 38a,38b ...) mit erhitzten Werkzeughaltern (13; 36) der Vorrichtung (1; 20) manuell oder automatisch zugeführt werden.

20. Verfahren gemäß einem der Ansprüche 18 oder 19, **dadurch gekennzeichnet, dass** die Werkzeughalteraufnahmen (8a,8b ...; 38a,38b ...) kontinuierlich, ohne Unterbrechung durch die Vorrichtung (1; 20) geführt werden.

21. Verfahren gemäß einem der Ansprüche 18 bis 20, **dadurch gekennzeichnet, dass** die Werkzeughalteraufnahmen (8a,8b ...; 38a,38b ...) taktweise durch die Vorrichtung (1; 20) geführt werden, wobei pro Takt mindestens eine Werkzeughalteraufnahme (8a,8b ...; 38a,38b ...) sich in einer Station (3,4,5,6,7; 22,23,24,29,41) der Vorrichtung (1; 20) befindet und zwischen den Takten mindestens eine Werkzeughalteraufnahme (8a,8b ...; 38a,38b ...) von einer Station (3,4,5,6,7; 22,23,24,29,41) der Vorrichtung (1; 20) einer nachfolgenden zugeführt wird, wobei bevorzugt zwischen den Takten die Abschirmtüren (9,10; 27,28,40) zwischen den einzelnen Stationen (3,4,5,6,7; 22,23,24,29,41) geöffnet werden, wobei insbesondere nur diejenigen Abschirmtüren (9,10; 40) geöffnet werden, die von Werkzeughalteraufnahmen (8a,8b ...; 38a,38b ...) passiert werden.

22. Vorrichtung (1; 20) nach einem der Ansprüche 1 und 2 bis 17,
**dadurch gekennzeichnet dass**
die Mittel zur Führung (11; 25,39) angepasst sind, mehrere Werkzeughalteraufnahmen (8a,8b ...; 38a,38b ...) gleichzeitig nacheinander im Wesentlichen vertikal durch die Vorrichtung (1; 20) zu führen.

## Claims

1. Device (1; 20) for cooling tool holders (13; 36) with shrink fit chucks, which are accommodated in a tool holder receptacle (8a, 8b ...; 38a, 38b ...), with means for cooling (15; 34), which spray the tool holder (13; 36) with coolant in liquid form, wherein means for transporting (11; 25, 39) the tool holder receptacle (8a, 8b ...; 38a, 38b ...) are provided, wherein means for activating the means for cooling (15; 34) and the means for transporting (11; 25, 39) are provided, **characterized in that** furthermore a feed station (3; 29) is provided upstream of the cooling station (4; 22) for feeding of tool holders (13; 36) being hot by a shrinkage operation, wherein the feed station (3; 29) and the cooling station (4; 22) are implemented in isolated areas of the device (1; 20) from each other, and wherein the means for transporting (11; 25, 39) are adapted for simultaneously transporting several tool holder receptacles (8a,8b ...; 38a,38b ...) through the device (1; 20) in succession, wherein in particular the means for transporting (11; 25, 39) are adapted for transporting the tool holder receptacles through the device essentially horizontally.

2. Device (1; 20) in accordance with claim 1, **characterized in that** the means for activation are adapted such that the device (1; 20) can be operated semi-automatically, and preferably fully automatically.

3. Device (1; 20) in accordance with claim 1 or 2, **characterized in that** the means for transporting (11) are adapted for transporting the tool holder receptacles (8a, 8b ...) in an essentially linear first transport direction.

4. Device (20) in accordance with any of the previous claims, **characterized in that** the means for transporting (25) are adapted for transporting the tool holder receptacles (38a, 38b ...) in an essentially circular first transport direction.

5. Device (1; 20) in accordance with any of the previous claims, **characterized in that** furthermore means for drying (16; 35) the tool holder (13; 36) cooled by spraying with coolant are provided and the means for cooling (15; 34) and the means for drying (16; 35) are implemented in isolated areas of the device (1; 20) separate from each other as cooling station (4; 22) and drying station (5; 23).

6. Device (1; 20) in accordance with any of the previous claims, **characterized in that** furthermore means for temperature detection are provided that can detect the temperature of a tool holder (13; 36) and that actuate the means for activation accordingly, such that the means for cooling (15; 34) selectively release coolant.

7. Device (1; 20) in accordance with any of the previous claims, **characterized in that** furthermore a parking station (7; 41) for tool holder receptacles (8a, 8b ...; 38a, 38b) with cooled or cooled and dried tool holders (13; 36) is provided.

8. Device (1; 20) in accordance with any of the previous claims, **characterized in that** after the cooling station (4; 22) or the drying station (5; 23) is provided a transfer station (6; 24) for outputting the tool holder receptacles (8a,8b ...; 38a,38b ...) or transferring the tool holder receptacles (8a, 8b ...; 38a, 38b ...) into the parking station (7; 41).

9. Device (1; 20) in accordance with any of claims 7 or 8, **characterized in that** the means for transporting (11; 39) are adapted for transporting the tool holder receptacles (8a,8b ...; 38a,38b ...) into the parking station (7; 41) in a second transport direction, which deviates horizontally from the first transport direction.

10. Device (1) in accordance with any of claims 7 to 9, **characterized in that** the means for transporting (11) are adapted for transporting the tool holder receptacles (8a, 8b) from the feed station in a third transport direction, which deviates horizontally from the first transport direction, to the cooling station (4).

11. Device (1; 20) in accordance with any of the previous claims, **characterized in that** the means for transporting (11; 39) comprise one or more chains or conveyors with dogs or gripper devices, which are arranged laterally or above the transport direction and are preferably traversable along the transport direction, for the tool holder receptacles (8a, 8b ...; 38a, 38b ...).

12. Device (1; 20) in accordance with any of the previous claims, **characterized in that** at least the cooling station (4; 22), preferably the drying station (5; 23) as well, have means of shielding (2, 9; 21, 27, 28) that essentially suppress escape of coolant into the vicinity of the device (1; 20), wherein in particular an openable shielding door (9; 27, 28) is provided in front of the cooling station (4; 22) and/or an openable shielding door (27, 28) is provided after the cooling station (22).

13. Device (20) in accordance with claim 12, **characterized in that** an openable shielding door (27, 28) is provided after the drying station (23), wherein in particular an openable shielding door (10; 40) is provided after the transfer station (6; 24).

14. Device (20) in accordance with any of the previous claims, **characterized in that** the cooling means is designed as a ring (30) having several coolant spray elements (34), which are vertical relative to the tool holder (36) located in the cooling station (22), and can be raised and lowered essentially concentrically with this and/or that the means of drying is designed as a ring (31) having several compressed-air spray elements (35), which are vertical relative to the tool holder (36) located in the drying station (23), and can be raised and lowered essentially concentrically with this.

15. Device (1) in accordance with any of claims 1 to 13, **characterized in that** the means of cooling are designed as several coolant spray elements (15), which, relative to the first transport direction, are arranged on both sides of the tool holder (13) arranged in the cooling station (4) and preferably point radially towards the tool holder (13).

16. Device (1) in accordance with any of claims 1 to 13 or 15, **characterized in that** the means of drying are designed as compressed-air spray elements (16), which, relative to the first transport direction, are arranged at the sides of the tool holder (13) accommodated in the drying station (5).

17. Device (1) in accordance with any of claims 15 or 16, **characterized in that** the coolant spray elements (15) and/or the compressed-air spray elements (16) may be raised and lowered vertically relative to the tool holder (13).

18. Method for cooling tool holders (13; 36) with shrink fit chucks, which are accommodated in a tool holder receptacle (8a, 8b ...; 38a, 38b ...), comprising cooling of the tool holder (13; 36) with a coolant in liquid form, **characterized by** feeding of tool holders (13; 36) being hot by a shrinkage operation before cooling, wherein feeding and cooling being carried out in isolated areas (4, 3; 22, 29) of the device (1; 20) separate from each other, and transporting of simultaneously several tool holder receptacles (8a, 8b ...; 38a, 38b ...) in succession by means for transporting (11; 25, 39) the tool holder receptacles (8a, 8b ...; 38a, 38b ...), wherein the method is performed especially with a device (1; 20) in accordance with the claims 1 to 17 and the steps of the method are executed especially semi-automatically, preferably fully automatically, wherein in particular the liquid coolant is sprayed onto the tool holder (13; 26), and, after the cooling step, a drying step is carried out, in which the tool holder (13; 36) is sprayed preferably with compressed air.

19. Method in accordance with claim 18, **characterized in that** the tool holder receptacles (8a, 8b ...; 38a, 38b ...) are feeded with heated tool holders (13; 36) to the device (1; 20) either manually or automatically.

20. Method in accordance with any of claims 18 to 19, **characterized in that** the tool holder receptacles (8a, 8b ...; 38a, 38b ...) are transported continuously through the device (1; 20) without interruption.

21. Method in accordance with any of claims 18 to 20, **characterized in that** the tool holder receptacles (8a, 8b ...; 38a, 38b ...) are transported periodically through the device (1; 20), with, for each period, at least one tool holder receptacle (8a, 8b ...; 38a, 38b ...) being located in a station (3, 4, 5, 6, 7; 22, 23, 24, 29, 41) of the device (1; 20) and, in between the periods, at least one tool holder receptacle (8a, 8b ...; 38a, 38b ...) being transported from one station (3, 4, 5, 6, 7; 22, 23, 24, 29, 41) of the device (1; 20) to a succeeding one, wherein preferably in between periods, the shielding doors (9, 10; 27, 28, 40) between the individual stations (3, 4, 5, 6, 7; 22, 23, 24, 29, 41) are opened, wherein in particular only those shielding doors (9, 10; 40) are opened which the tool holder receptacles (8a, 8b ...; 38a, 38b ...) pass.

22. Device (1) in accordance with any of claims 1 and 2 to 17, **characterized in that** the means for transporting (11; 25, 39) are adapted for simultaneously transporting several tool holder receptacles (8a, 8b ...; 38a, 38b ...) in succession through the device (1; 20) vertically.

## Revendications

1. Dispositif (1 ; 20) destiné à refroidir des porte-outils (13 ; 36) dotés de mandrins de serrage qui sont reçus dans un récepteur de porte-outil (8a, 8b... ; 38a, 38b...), ledit dispositif comportant des moyens de refroidissement (15 ; 34) qui alimente le porte-outil (13 ; 36) en agent de refroidissement se présentant sous forme liquide, des moyens de guidage (11 ; 25, 39) du récepteur de porte-outil (8a, 8b... ; 38a, 38b...) étant prévus, des moyens d'activation des moyens de refroidissement (15 ; 34) et des moyens de guidage (11 ; 25, 39) étant prévus **caractérisé en ce que**
il est en outre prévu une station d'amenée (3 ; 29) destinée à amener en amont de la station de refroidissement (4 ; 22) un porte-outil (13 ; 36) qui est chaud à cause d'un processus de serrage, la station d'amenée (3 ; 29) et la station de refroidissement (4 ; 22) étant réalisées de façon à être séparées l'une de l'autre dans des régions individuelles du dispositif (1 ; 20), et les moyens de guidage (11 ; 25, 39) étant adaptés pour guider plusieurs récepteurs de porte-outil (8a, 8b... ; 38a, 38b...) simultanément l'un après l'autre à travers le dispositif (1 ; 20), les moyens de guidage (11 ; 25, 39) étant notamment adaptés pour guider les récepteurs de porte-outil sensiblement horizontalement à travers le dispositif.

2. Dispositif (1 ; 20) selon la revendication 1, **caractérisé en ce que** les moyens d'activation sont adaptés pour exploiter le dispositif (1 ; 20) de façon semi-automatique, de préférence de façon totalement automatique.

3. Dispositif (1) selon la revendication 1 ou 2, **caractérisé en ce que** les moyens de guidage (11) sont adaptés pour guider les récepteurs de porte-outil (8a, 8b...) dans une première direction de guidage sensiblement linéaire.

4. Dispositif (20) selon l'une des revendications précédentes, **caractérisé en ce que** les moyens de guidage (25) sont adaptés pour guider les récepteurs de porte-outil (38a, 38b...) dans une première direction de guidage sensiblement circulaire.

5. Dispositif (1 ; 20) selon l'une des revendications précédentes, **caractérisé en ce qu'**il est en outre prévu des moyens de séchage (16 ; 35) du porte-outil (13, 36) refroidi par l'alimentation en agent de refroidissement et **en ce que** les moyens de refroidissement (15 ; 34) et les moyens de séchage (16 ; 35) sont réalisés, en étant séparés l'un de l'autre, sous la forme d'une station de refroidissement (4 ; 22) et d'une station de séchage (5 ; 23) dans des régions individuelles du dispositif (1 ; 20).

6. Dispositif (1 ; 20) selon l'une des revendications précédentes, **caractérisé en ce qu'**il est en outre prévu des moyens de détection de température qui peuvent détecter la température d'un porte-outil (13 ; 36) et qui commandent les moyens d'activation de façon correspondante de sorte que les moyens de refroidissement (15 ; 34) délivrent l'agent de refroidissement de façon appropriée.

7. Dispositif (1 ; 20) selon l'une des revendications précédentes, **caractérisé en ce qu'**il est en outre prévu une station d'attente (7 ; 41) destinée à des récepteurs de porte-outil (8a, 8b... ; 38a, 38b...) comportant des porte-outils (13 ; 36) refroidis ou refroidis et séchés.

8. Dispositif (1 ; 20) selon l'une des revendications précédentes, **caractérisé en ce que** en aval de la station de refroidissement (4 ; 22) ou de la station de séchage (5 ; 23) il est prévu une station de transfert (6 ; 24) destinée à délivrer des récepteurs de porte-outil (8a, 8b... ; 38a, 38b...) ou à transférer des récepteurs de porte-outil (8a, 8b... ; 38a, 38b...) dans la station d'attente (7 ; 41).

9. Dispositif (1 ; 20) selon l'une des revendications 7 ou 8, **caractérisé en ce que** les moyens de guidage (11 ; 39) sont adaptés pour guider les récepteurs de porte-outil (8a, 8b... ; 38a, 38b...) jusque dans la station d'attente (7 ; 41) dans une deuxième direction du guidage qui diffère horizontalement de la première direction de guidage.

10. Dispositif (1) selon l'une des revendications 7 à 9, **caractérisé en ce que** les moyens de guidage (11) sont adaptés pour guider les récepteurs de porte-outil (8a, 8b...) d'une station d'amenée jusqu'à la station de refroidissement (4) dans une troisième direction de guidage qui diffère horizontalement de la première direction de guidage.

11. Dispositif (1 ; 20) selon l'une des revendications précédentes, **caractérisé en ce que** les moyens de guidage (11 ; 39) comportent une ou plusieurs chaînes à chenille ou bandes transporteuses dotées d'éléments d'entraînement ou de mécanismes de préhension qui sont destinés aux récepteurs de porte-outil (8a, 8b... ; 38a, 38b...) et qui sont disposés latéralement ou au-dessus de la direction de guidage et sont de préférence déplaçables le long de la direction de guidage.

12. Dispositif (1 ; 20) selon l'une des revendications précédentes, **caractérisé en ce que** au moins la station de refroidissement (4 ; 22), de préférence également la station de séchage (5 ; 23), comporte des moyens de protection (2, 9 ; 21, 27, 28) qui empêchent sensiblement la fuite d'agent de refroidissement dans l'environnement du dispositif (1 ; 20), une porte de protection (9 ; 27, 28) pouvant s'ouvrir étant prévue en particulier en amont de la station de refroidissement (4 ; 22) et/ou une porte de protection (27, 28) pouvant s'ouvrir étant prévue en aval de la station de refroidissement (22).

13. Dispositif (20) selon la revendication 12, **caractérisé en ce que** en aval de la station de séchage (23) il est prévu une porte de protection (27, 28) pouvant s'ouvrir, une porte de protection (10 ; 40) pouvant s'ouvrir étant prévue notamment en aval de la station de transfert (6 ; 24).

14. Dispositif (20) selon l'une des revendications précédentes, **caractérisé en ce que** les moyens de refroidissement sont réalisés sous la forme d'une bague (30) dotée de plusieurs éléments de projection d'agent de refroidissement (34) qui peuvent être abaissés et soulevés concentriquement verticalement par rapport au porte-outil (36) se trouvant dans la station de refroidissement (22) et sensiblement concentriquement à celui-ci et/ou **en ce que** les moyens de séchage sont réalisés sous la forme d'une bague (31) dotée de plusieurs éléments de projection d'air comprimé (35) qui peuvent être abaissés et soulevés verticalement par rapport au porte-outil (36) se trouvant dans la station de séchage (23) et sensiblement concentriquement à celui-ci.

15. Dispositif (1) selon l'une des revendications 1 à 13, **caractérisé en ce que** les moyens de refroidissement sont réalisés sous la forme de plusieurs éléments de projection d'agent de refroidissement (15) qui sont disposés des deux côtés du porte-outil (13), disposé dans la station refroidissement (4), par référence à la première direction de guidage et qui sont dirigés de préférence vers le porte-outil (13).

16. Dispositif (1) selon l'une des revendications 1 à 13 ou 15, **caractérisé en ce que** les moyens de séchage sont réalisés sous la forme d'éléments de projection d'air comprimé (16) qui sont disposés latéralement au porte-outil (13), reçu dans la station de séchage (5), par référence à la première direction de guidage.

17. Dispositif (1) selon l'une des revendications 15 ou 16, **caractérisé en ce que** les éléments de projection d'agent de refroidissement (15) et/ou les éléments de projection d'air comprimé (16) peuvent être abaissés ou soulevés verticalement par rapport au porte-outil (13).

18. Procédé de refroidissement de porte-outils (13 ; 36) dotés de mandrins de serrage qui sont reçus dans un récepteur de porte-outil (8a, 8b... ; 38a, 38b...), ledit procédé comportant un refroidissement du porte-outil (13 ; 36) au moyen d'un agent de refroidissement liquide, **caractérisé par**
l'amenée d'un porte-outil (13 ; 36) chauffé par un processus de serrage avant le refroidissement, l'amenée et le refroidissement étant effectué dans des régions individuelles (4, 3 ; 22, 29) du dispositif (1 ; 20) qui sont réalisées en étant séparées l'une de l'autre, et l'amenée simultanée de plusieurs récepteurs de porte-outil (8a, 8b... ; 38a, 38b...) l'un après l'autre par des moyens de guidage (11 ; 25, 39) des récepteurs de porte-outil (8a, 8b... ; 38a, 38b),
le procédé étant réalisé notamment au moyen d'un dispositif (1 ; 20) selon l'une des revendications 1 à 17 et les étapes de précédé étant mises en oeuvre notamment de façon semi-automatique, de préférence de façon totalement automatique, l'agent de refroidissement liquide étant notamment projeté sur le porte-outil (13 ; 36), et après l'étape de refroidissement une étape de séchage étant effectuée dans laquelle le porte-outil (13 ; 36) est de préférence aspergé d'air comprimé.

19. Procédé selon la revendication 18, **caractérisé en ce que** les récepteurs de porte-outil (8a, 8b... ; 38a, 38b...) dotés de porte-outils (13 ; 36) chauffés sont amenés manuellement ou automatiquement au dispositif (1 ; 20).

20. Procédé selon l'une des revendications 18 ou 19, **caractérisé en ce que** les récepteurs de porte-outil (8a, 8b... ; 38a, 38b...) sont amenés en continu, sans interruption, à travers le dispositif (1 ; 20).

21. Procédé selon l'une des revendications 18 à 20, **caractérisé en ce que** les récepteurs de porte-outil (8a, 8b... ; 38a, 38b...) sont amenés de façon cadencée à travers le dispositif (1 ; 20), à chaque impulsion de cadencement un récepteur de porte-outil (8a, 8b... ; 38a, 38b...) se trouvant dans une station (3, 4, 5, 6, 7 ; 22, 23, 24, 29, 41) du dispositif (1 ; 20) et entre les impulsions de cadencement au moins un récepteur de porte-outil (8a, 8b... ; 38a, 38b...) étant amené d'une station (3, 4, 5, 6, 7 ; 22, 23, 24, 29, 41) du dispositif (1 ; 20) à une station suivante, les portes de protection (9, 10 ; 27, 28, 40) étant ouvertes entre les stations individuelles (3, 4, 5, 6, 7 ; 22, 23, 24, 29, 41) de préférence entre les impulsions de cadencement, notamment seules les portes de protection (9, 10 ; 40) qui laissent passer des récepteurs de porte-outil (8a, 8b... ; 38a, 38b) sont ouvertes.

22. Dispositif (1 ; 20) selon l'une des revendications 1 et 2 à 17, **caractérisé en ce que** les moyens de guidage (11 ; 25, 39) sont adaptés pour guider plusieurs récepteurs de porte-outil (8a, 8b... ; 38a, 38b...) simultanément l'un après l'autre sensiblement verticalement à travers le dispositif (1 ; 20).
